# EUROPÄISCHE PATENTANMELDUNG

(11) **EP 0 629 772 A1**
(43) Veröffentlichungstag der Anmeldung: **21.12.1994**
(21) Anmeldenummer: 94103658.4
(22) Anmeldetag: 10.03.1994
(51) Int. Cl.: F02B 31/00, F01L 1/26, F01L 3/06, F01L 1/44

(54) **Einlasskanalsystem für eine Brennkraftmaschine mit mindestens zwei im Zylinderkopf angeordneten Einlassventilen pro Zylinder**

(30) Priorität: 19.03.1993 DE 4308805
(71) Anmelder: ADAM OPEL AG, D-65423 Rüsselsheim (DE)
(72) Erfinder: Grebe, Uwe Dieter, Dipl.-Ing., D-65468 Trebur (DE)
(74) Vertreter: Kümpfel, Heinz, Dipl.-Ing.

(57) **Zusammenfassung**

Die Erfindung betrifft ein Einlaßkanalsystem für eine Brennkraftmaschine mit mindestens zwei im Zylinderkopf (1) angeordneten Einlaßventilen. Dabei ist ein Haupteinlaßkanal und mindestens ein Nebeneinlaßkanal (4) vorgesehen, wobei der Nebeneinlaßkanal (4) durch einen Drehschieber (10) wahlweise absperrbar ist. Der Drehschieber (10) ist koaxial zu dem Einlaßventil (3) des Nebeneinlaßkanals (4) angeordnet und im Zylinderkopf (1) gelagert. Damit kann der Schadraum zwischen Einlaßventil (3) und Drehschieber (10) besonders klein gehalten werden. Haupteinlaßkanal und Nebeneinlaßkanal (4) können unabhängig voneinander geführt sein. Der Nebeneinlaßkanal (4) kann trotz eines Drosselorgans strömungsgünstig ausgeführt werden.

## Beschreibung

Die Erfindung betrifft ein Einlaßkanalsystem für eine Brennkraftmaschine mit mindestens zwei im Zylinderkopf angeordneten Einlaßventilen pro Zylinder gemäß den weiteren im Oberbegriff des ersten Patentanspruchs genannten Merkmalen.

Ein Einlaßkanalsystem der gattungsgemäßen Art ist aus der JP 60-93122 (A) bekannt. Bei diesem bekannten Einlaßkanalsystem ist ein Drosselorgan als Drehschieber ausgebildet, der als dünnwandiges Rohr in einem Haupteinlaßkanal axial in Richtung dieses Kanals angeordnet ist. Ein in der Wandung des drehbar gelagerten dünnwandigen Rohres vorgesehenes Fenster gibt je nach Stellung eine Öffnung zu einem radial abzweigenden Nebeneinlaßkanal frei bzw. sperrt diesen ab. Dabei ist allerdings das Volumen des Raumes zwischen Absperrung und Ventil relativ groß. Es hat sich gezeigt, daß bei einem Volumenanteil dieses Raumes von mehr als 10 % bezogen auf das Hubvolumen des Zylinders das Drehmoment der Brennkraftmaschine besonders bei geringen Drehzahlen stark zurückgeht. Die somit erforderlichen kleinen Volumina des Raumes zwischen Drehschieberabsperrung und Ventil des Zylinders können aber mit dem bekannten Einlaßkanalsystem nicht erzielt werden. Darüber hinaus erzeugt der radiale Abzweig des Nebeneinlaßkanals vom Haupteinlaßkanal nachteilige Strömungswiderstände, welche die Füllung des Zylinders besonders bei Vollast, bei welcher entsprechend große Luftmengen die Ansaugkanäle durchströmen, erheblich behindern. Von Nachteil ist auch, daß der Querschnitt des Haupteinlaßkanals auf den Gasdurchsatz bei Vollast der Brennkraftmaschine bemessen sein muß, da durch ihn auch der Gasanteil des Nebeneinlaßkanals geführt ist. Bei Teillast und geschlossenem Nebeneinlaßkanal ist dieser Querschnitt dann für die Erzielung einer optimalen Gasgeschwindigkeit zu groß. Bei der Bemessung des Kanalquerschnittes muß somit ein Kompromiß getroffen werden, der sowohl den Anforderungen bei Vollast als auch bei geringer Teillast nicht gerecht werden kann.

Der Erfindung liegt die Aufgabe zugrunde, ein Einlaßsystem der eingangs genannten Art derart weiterzubilden, daß das Volumen des Raumes zwischen der Drosseleinrichtung und dem Einlaßventil des Nebeneinlaßkanals zum Zylinder gering bleibt, die Querschnitte des Haupteinlaßkanals und des Nebeneinlaßkanals den Anforderungen sowohl bei Vollast als auch bei Teillast entsprechen und somit über einen weiten Betriebsbereich optimale Gasgeschwindigkeiten vorliegen und daß die Drosseleinrichtung dabei auch den durch den Nebeneinlaßkanal strömenden Gasen keinen nennenswerten Widerstand entgegensetzt.

Die Aufgabe ist erfindungsgemäß durch die im Kennzeichen des ersten Patentanspruches angegebenen Merkmale gelöst.

Besonders vorteilhafte konstruktive Ausgestaltungen der Erfindung sind durch die Merkmale der weiteren Ansprüche dargestellt.

Durch die Erfindung ergibt sich in vorteilhafter Weise ein Einlaßkanalsystem, bei dem jedem Einlaßventil ein gesonderter im Rahmen der Zylinderkopfabmessungen beliebig langer Einlaßkanal zugeordnet werden kann. Sowohl der Haupteinlaßkanal als auch der Nebeneinlaßkanal kann auf seine optimale Länge und seinen optimalen Querschnitt zu den Anforderungen der Brennkraftmaschine abgestimmt werden, wobei jeweils die Anforderungsbereiche berücksichtigt werden können, bei denen die einzelnen Einlaßkanäle am Durchsatz der Ladung beteiligt sind. Auch die Richtung der einzelnen Einlaßkanäle in bezug auf den Zylinder kann zur Erzielung effektiver Wirbelbildung im Brennraum optimiert werden. Dabei ermöglicht die relativ frei gestaltbare Wandung im Inneren des Drehschiebers eine besonders gute Anpassung des Nebenansaugkanales an die angestrebte Strömungsform und die Einblasrichtung aus diesem Kanal in den Zylinder.

Ausführungsbeispiele der Erfindung sind nachstehend anhand von Zeichnungen näher beschrieben. Es zeigen
- Fig. 1:: einen Schnitt durch einen Zylinderkopf einer Brennkraftmaschine entlang der Mittellinie eines Einlaßventils eines Nebenansaugkanals;
- Fig. 2:: einen vergrößerten Ausschnitt aus dem Schnitt nach Fig. 1;
- Fig. 3:: zwei Drehschieber von benachbarten Zylindern, verbunden mit einer Zahnstange, in perspektivischer Darstellung.

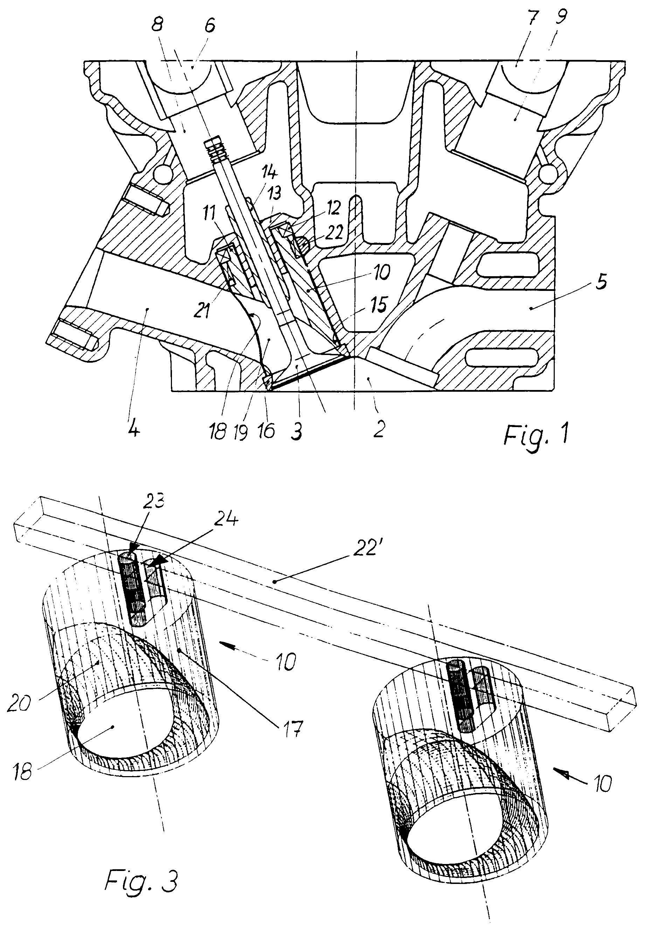

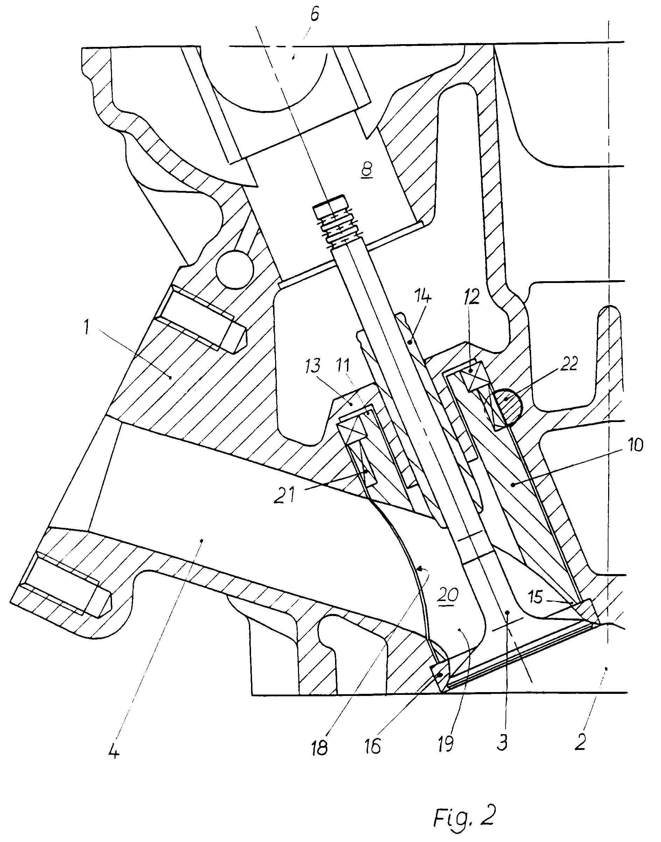

In einem Zylinderkopf 1 einer Brennkraftmaschine sind für jeden Brennraum 2 mindestens zwei Einlaßventile und mindestens ein Auslaßventil vorgesehen. Eines der Einlaßventile steuert einen Hauptansaugkanal, der auf der Zeichnung nicht erkennbar ist. Ein anderes Einlaßventil 3 steuert einen Nebeneinlaßkanal 4. Ein nicht dargestelltes Auslaßventil steuert einen Auslaßkanal 5. Die Ventile werden von im Zylinderkopf 1 gelagerten Nockenwellen 6, 7 über nicht dargestellte Tassenstössel betätigt, die in den Stösselführungen 8, 9 des Zylinderkopfes 1 verschiebbar gelagert sind. Unterhalb des Brennraumes 2 ist ein Zylinder angeordnet, in dem in an sich bekannter Weise ein Hubkolben dichtend gleitet und so einen Arbeitsraum bildet. Beim Füllen des Arbeitsraumes mit Frischgas sind das Einlaßventil des Hauptansaugkanals (nicht dargestellt) und das Einlaßventil 3 des Nebenansaugkanals 4 geöffnet. Um das Einlaßventil 3 des Nebeneinlaßkanals 4 herum ist ein walzenförmiger Drehschieber 10 angeordnet, der an der einen Stirnseite 11 mit einem Lager 12 im Zylinderkopf 1 drehbar gelagert ist. Das Lager 12 stützt sich an einem Kragen 13 des Zylinderkopfes 1 ab, welcher sich um die Ventilführung 14 erstreckt. Die andere Stirnseite 15 des Drehschiebers 10 ist unmittelbar benachbart einem Ventilsitzring 16, an welchem der Teller des Einlaßventils 3 im geschlossenen Zustand aufliegt. Der Drehschieber 10 hat an seinem Umfang 17 ein Fenster 18, welches in einer Offenstellung des Drehschiebers 10 in seiner Kontur dem Querschnitt des Nebeneinlaßkanals 4 angeglichen ist. Diesem Fenster 18 schließt sich im Inneren des Drehschiebers 10 ein Kanalabschnitt 19 an, welcher dem Strömungsverlauf des Nebeneinlaßkanals 4 folgt und der mit seiner Wandung 20 den Gasstrom des Frischgases führt. Im Bereich des Lagers 12 ist bei der Ausführung nach Fig. 1 und 2 am Umfang des Drehschiebers 10 eine Verzahnung 21 eingebracht, in welche eine im Zylinderkopf 1 verschiebbar gelagerte Zahnstange 22 eingreift. Die Zahnstange 22 hat einen runden Querschnitt und ist in einer entsprechenden Bohrung des Zylinderkopfes 1 geführt, welche sich über die Länge des Zylinderkopfes 1 erstreckt, so daß bei mehreren Zylindern die Drehschieber aller Zylinder von einer Zahnstange beaufschlagt sind.

In Fig. 3 ist ein Ausführungsbeispiel dargestellt, bei dem die Zahnstange 22' mit einem als Zapfen 23 ausgebildeten Zahn in jeweils eine stirnseitig in den Drehschieber 10' eingebrachte radial verlaufende Nut 24 eingreift. An einem Ende der Zahnstange 22, 22' greift ein Stellmotor an, welcher die Zahnstange 22, 22' in ihrer Lagerung im Zylinderkopf 1 zu verschieben vermag. Der Stellmotor ist vorzugsweise als Elektromotor mit einem daran befindlichen Schraub- oder Schneckentrieb ausgeführt. Er kann aber auch als elektrischer Linearmotor oder als druckbeaufschlagte Druckdose ausgeführt sein. Der Stellmotor ist angesteuert von einem Rechner, welcher als Eingangsgrößen Daten der Brennkraftmaschine wie Last, Drehzahl, Temperatur, Laständerungsgeschwindigkeit sowie bei Verwendung der Brennkraftmaschine als Fahrzeugantriebsmotor fahrzeugspezifische Daten wie z. B. die Fahrgeschwindigkeit zugeführt erhält und der daraus einen Wert ermittelt, welcher analog der erforderlichen Drosselung des Nebenansaugkanales 4 ist. Dieser Wert wird vom Stellmotor in eine Längsverschiebung der Zahnstange 22, 22' umgesetzt. Durch diese Längsverschiebung wird der Drehschieber 10 mehr oder weniger verdreht und er drosselt damit gleichfalls mehr oder weniger den Gasdurchlaß durch den Nebenansaugkanal 4. In vielen Anwendungsfällen wird es ausreichend sein, eine Zweipunktregelung vorzusehen, bei welcher der Drehschieber 10 den Nebeneinlaßkanal 4 entweder freigibt oder verschließt.

In den dargestellten Ausführungsbeispielen ist die äußere Kontur des Drehschiebers 10 jeweils zylinderförmig. Die Erfindung ist jedoch nicht auf eine solche zylinderförmige Gestaltung des Drehschiebers 10 beschränkt. Der Drehschieber 10 kann z. B. ebenso eine kegelstumpfförmige Kontur haben, wobei der größere Durchmesser vorzugsweise am Ventilsitz 16 benachbart ist. Es sind aber auch andere Rotationskörper als Außenkontur für den Drehschieber 10 einsetzbar.

Ebenso ist mit den dargestellten Ausführungsbeispielen die Möglichkeit der Lagerung des Drehschiebers 10 im Zylinderkopf 1 nicht erschöpft. Der Drehschieber 10 kann z. B. direkt auf der Ventilführung 14 gelagert sein, wobei die Ventilführung 14 auch zweiteilig ausgeführt werden kann und eines der Teile als Übertragungsglied für die Drehbewegung des Drehschiebers dient.

Mit dem erfindungsgemäßen Einlaßkanalsystem kann ein Nebeneinlaßkanal 4 neben einem Haupteinlaßkanal mit einem günstigen kleinen Schadraum zwischen Ventil 3 und Drosselorgan (Drehschieber 10) ausgeführt werden. Bei geöffnetem Drehschieber 10 wird durch die besondere Anordnung dem durchströmenden Gas kein zusätzlicher Widerstand geboten, wie dies bei Drosselklappen unumgänglich ist. Es ist auch keine zusätzliche Gasumlenkung wie bei einem axial mit dem Haupteinlaßkanal angeordneten Drehschieber erforderlich, von dem ein Nebeneinlaßkanal abzweigt. Durch die Erfindung kann der Nebeneinlaßkanal unabhängig vom Haupteinlaßkanal geführt werden und es ist so auch möglich, mehrere Nebeneinlaßkanäle vorzusehen, von denen jeder mit einer nach der Erfindung ausgestalteten Drosseleinrichtung versehen werden kann. Die mögliche Trennung von Haupteinlaßkanal und Nebeneinlaßkanal ermöglicht auch eine unabhängige Bemessung derer Querschnitte. Damit kann die Gasgeschwindigkeit in dem Einlaßkanalsystem auch bei unterschiedlichen Drehzahl- und Lastbereichen der Brennkraftmaschine nahe an einem Optimum gehalten werden.

## Patentansprüche

1. Einlaßkanalsystem für eine Brennkraftmaschine mit zwei oder mehr im Zylinderkopf angeordneten Einlaßventilen pro Zylinder, wobei jedem Einlaßventil ein Einlaßkanal zugeordnet ist und jeweils mindestens ein Nebeneinlaßkanal mit einer regelbaren Drosseleinrichtung versehen ist, die als rohrförmiger Drehschieber ausgebildet ist, dadurch gekennzeichnet, daß der Drehschieber (10, 10') koaxial zu dem Einlaßventil (3) des Nebeneinlaßkanals (4) drehbar gelagert ist, radial mit einem Fenster (18) an dem Nebeneinlaßkanal (4) anschließt und mit einer axialen Öffnung nahe des Ventilsitzes (16) des Einlaßventils (3) angeordnet ist, wobei der Drehschieber (10, 10') zwischen dem radialen Fenster (18) und der axialen Öffnung eine dem Strömungsverlauf des durchströmenden Gases angepaßte Wandung (20) aufweist.

2. Einlaßkanalsystem nach Anspruch 1, dadurch gekennzeichnet, daß der Drehschieber (10, 10') zwischen einem Ventilsitzring (16) und einem Kragen (13) um die Ventilführung (14) des dem Nebeneinlaßkanal (4) zugeordneten Einlaßventils (3) angeordnet und mit einem Lager (12) drehbar im Zylinderkopf (1) abgestützt ist.

3. Einlaßkanalsystem nach Anspruch 1 und 2, dadurch gekennzeichnet, daß der Drehschieber (10, 10') über ein mechanisches Stellmittel verdrehbar ist, wobei das Maß der Stellbewegung programmgesteuert durch einen Rechner ermittelt wird.

4. Einlaßkanalsystem nach Anspruch 1 bis 3, dadurch gekennzeichnet, daß der Drehschieber (10, 10') in an sich bekannter Weise alternativ in eine geöffnete und eine geschlossene Stellung einstellbar ist.

5. Einlaßkanalsystem nach Anspruch 1 bis 4, dadurch gekennzeichnet, daß als Stellmittel eine motorbeaufschlagte Zahnstange (22, 22') dient, welche in eine am Umfang des Drehschiebers (10, 10') befindliche Verzahnung (21) eingreift und die im Zylinderkopf (1) längsverschieblich gelagert ist, wobei ein Stellmotor die Zahnstange (22, 22') in Abhängigkeit von der Last der Brennkraftmaschine und/oder der Drehzahl der Brennkraftmaschine und/oder der Temperatur der Brennkraftmaschine und/oder der Laständerungsgeschwindigkeit der Brennkraftmaschine sowie von Betriebsdaten des durch die Brennkraftmaschine angetriebenen Aggregates verschiebt und damit den Drehschieber (10, 10') drehend verstellt.

6. Einlaßkanalsystem nach Anspruch 1 bis 5, dadurch gekennzeichnet, daß die Zahnstange (22') jeweils mit nur einem Zahn (Zapfen 23) in einer radial gerichteten Nut (24) des Drehschiebers (10') eingreift.

7. Einlaßkanalsystem nach den Ansprüchen 1 bis 6, dadurch gekennzeichnet, daß die Zahnstange (22, 22') entlang einer Zylinderbank geführt ist und die Drehschieber (10, 10') der Nebeneinlaßkanäle (4) aller in der Zylinderbank befindlichen Zylinder beaufschlagt.

8. Einlaßkanalsystem nach Anspruch 1 bis 7, dadurch gekennzeichnet, daß als Stellmotor der Zahnstange (22, 22') ein Elektromotor dient.

9. Einlaßkanalsystem nach Anspruch 1 bis 7, dadurch gekennzeichnet, daß als Stellmotor der Zahnstange (22, 22') eine Druckdose dient.
